# EUROPÄISCHE PATENTSCHRIFT

(11) **EP 3 180 844 B1**
(45) Veröffentlichungstag und Bekanntmachung des Hinweises auf die Patenterteilung: **25.11.2020**
(21) Anmeldenummer: 14786154.6
(22) Anmeldetag: 08.10.2014
(51) Int. Cl.: H02M 1/32, H02H 7/122, H02J 3/36, H02H 9/04, H02J 3/26

(54) **STROMRICHTERANORDNUNG MIT KURZSCHLUSSEINHEIT SOWIE VERFAHREN ZUM TRENNEN EINER WECHSELSPANNUNGSLEITUNG**
POWER CONVERTER ARRANGEMENT WITH SHORT-CIRCUIT UNIT AND METHOD FOR SEPARATING AN AC VOLTAGE LINE
ENSEMBLE CONVERTISSEUR MUNI D'UNE UNITÉ DE COURT-CIRCUIT AINSI QUE PROCÉDÉ DE COUPURE D'UNE LIGNE À TENSION ALTERNATIVE

(43) Veröffentlichungstag der Anmeldung: 21.06.2017
(73) Patentinhaber: Siemens Aktiengesellschaft, 80333 München (DE)
(72) Erfinder: SCHRÖCK, Thomas, 91056 Erlangen (DE); SCHUSTER, Roland, 91056 Erlangen (DE); WEITZENFELDER, Peter, 91301 Forchheim (DE); ZHAN, Changjiang, 91058 Erlangen (DE)
(86) Internationale Anmeldenummer: PCT/EP2014/071549
(87) Internationale Veröffentlichungsnummer: WO 2016/055106

(56) Entgegenhaltungen:
- EP-A2- 2 169 222
- DE-A1- 10 103 031
- DE-A1-102011 081 111
- DE-U1-202010 016 830

## Beschreibung

Die Erfindung betrifft eine Stromrichteranordnung mit einem Stromrichter, der gleichspannungsseitig mit einer Gleichspannungsleitung und wechselspannungsseitig mit einer mehrphasigen Wechselspannungsleitung verbindbar ist, sowie mit einer wechselspannungsseitig des Stromrichters angeordneten Kurzschlusseinheit, wobei die Kurzschlusseinheit den Phasen der Wechselspannungsleitung zugeordnete Leiterzweige sowie wenigstens eine Schaltvorrichtung umfasst.

Eine derartige Stromrichteranordnung ist aus der Druckschrift WO 2011/150963 A1 bekannt. Bei der bekannten Stromrichteranordnung ist die Kurzschlusseinheit zwischen dem Stromrichter und einem in einer dreiphasigen Wechselspannungsleitung angeordnetem Transformator angeordnet, mittels dessen der Stromrichter an ein Wechselspannungsnetz angeschlossen ist. Die Kurzschlusseinheit der bekannten Stromrichteranordnung umfasst drei zu einem geerdeten Sternpunkt verbundene Leiterzweige. In jedem der Leiterzweige ist ein Schalter angeordnet, wobei die Leiterzweige mittels der Schalter jeweils mit einer ihnen zugeordneten Phase der Wechselspannungsleitung verbindbar sind.

Im Fall eines Fehlers in der Wechselspannungsleitung, beispielsweise eines Erdschlusses einer oder mehrerer Phasen der Wechselspannungsleitung, wird mittels der bekannten Kurzschlusseinheit die Wechselspannungsleitung geerdet, so dass ein symmetrischer Erdschluss in der Wechselspannungsleitung erzeugt wird. Dadurch kann ein Stromnulldurchgang auch bei einem unsymmetrischen Erdschluss in der Wechselspannungsleitung gewährleistet werden, so dass die Wechselspannungsleitung mittels einer Wechselspannungsschaltanlage getrennt werden kann. Eine solche Fehlerklärung ist notwendig, weil unter Umständen nur dadurch der Stromrichter vor Schäden, beispielsweise aufgrund von Überspannungen, Kurzschlussströmen und/oder thermischer Überlastung, geschützt werden kann. Es wird hierbei darauf hingewiesen, dass Wechselspannungsleitungen in diesem Zusammenhang sowohl Freileitungen als auch Kabelverbindungen sein können.

Aus der DE 20 2010 016 830 U1 ist eine Stromrichteranordnung mit einer Kurzschlussschaltung bekannt. Die Kurzschlussschaltung ist netzseitig eines Wechselrichters angeordnet und umfasst drei Kurzschlussteilschaltungen, die jeweils zwischen zwei Phasen des Wechselspannungsnetzes geschaltet sind. Die Kurzschlussschaltung hat die Aufgabe, im Fehlerfall einen Kurzschluss im Wechselspannungsnetz herbeizuführen.

Die DE 10 2011 081 111 A1 offenbart eine Photovoltaikanlage mit einem Wechselrichter und einer Kurzschließeinrichtung, die wechselspannungsseitig des Wechselrichters angeordnet ist. Die Kurzschließeinrichtung umfasst drei zu einem Sternpunkt verschaltete IGBTs.

In der EP 2 169 222 A2 ist eine Windenergieanlage beschrieben, bei der zwischen der Windenergieanlage und einem Netztransformator ein Überspannungsschutzgerät vorgesehen. Das Überspannungsschutzgerät umfasst ein Drosselmodul, das mittels eines Leistungsverzweigungsmoduls mit der Wechselspannungsleitung verbunden ist.

Die Aufgabe der Erfindung besteht darin, eine Stromrichteranordnung der oben genannten Art vorzuschlagen, mit der eine einfachere und zuverlässige Fehlerklärung möglich ist.

Die Aufgabe wird erfindungsgemäß durch eine Stromrichteranordnung gemäß dem Patentanspruch 1 gelöst. Erfindungsgemäß sind demnach Leiterzweige der Kurzschlusseinheit mittels der wenigstens einen Schaltvorrichtung unter Erzielung eines symmetrischen Kurzschlusses in der Wechselspannungsleitung mit der Wechselspannungsleitung und/oder miteinander erdverbindungsfrei verbindbar

Unter einem symmetrischen Kurzschluss wird im Unterschied zu einem Erdschluss eine erdverbindungsfreie elektrische Verbindung zwischen allen Phasen der Wechselspannungsleitung verstanden. Erfindungsgemäß können die Phasen also miteinander und/oder mit den Phasen der Wechselspannungsleitung, nicht jedoch mit einem Erdanschlusspunkt verbunden werden. Dies bedeutet, dass eine Erdung der Kurzschlusseinheit demnach entfällt.

Bei einem unsymmetrischen Kurzschluss in der Wechselspannungsleitung bewirkt die Erzeugung des symmetrische Kurzschlusses mittels der Kurzschlusseinheit vorteilhaft eine Symmetrisierung der Ströme in den Phasen der Wechselspannungsleitung. Auf diese Weise kann ein Stromnulldurchgang in der Wechselspannungsleitung erzwungen werden. Falls erforderlich, kann dann die Wechselspannungsleitung getrennt werden, um den Stromrichter zu schützen.

Bevorzugt umfasst die Stromrichteranordnung dazu eine wechselspannungsseitig des Umrichters angeordnete Schaltanordnung zum Trennen der Wechselspannungsleitung. Die Schaltanordnung kann dazu verwendet werden, die fehlerbehaftete Wechselspannungsleitung zu trennen, sobald wenigstens ein Stromnulldurchgang in der Wechselspannungsleitung erzwungen wurde. Besonders bevorzugt ist die Schaltanordnung ein dem Fachmann bekannter Wechselspannungs-Leistungsschalter.

Erfindungsgemäß umfasst die Stromrichteranordnung ferner einen in der Wechselspannungsleitung angeordneten Transformator. Der Transformator weist eine der Anzahl der Phasen der Wechselspannungsleitung entsprechende Anzahl von Primär- sowie Sekundärwicklungen, die eine Primär- und eine Sekundärseite des Transformators definieren. Die Wechselspannungsleitung ist dementsprechend an der Primärseite des Transformators mit einem Wechselspannungsnetz und an der Sekundärseite mit dem Stromrichter verbunden beziehungsweise verbindbar. Die Primärseite des Transformators ist beispielsweise über einen ersten Wechselspannungsabschnitt an das Wechselspannungsnetz anschließbar. Die Sekundärseite des Transformators ist beispielsweise über einen zweiten Wechselspannungsabschnitt an einen Wechselspannungsanschluss des Stromrichters anschließbar. Die Primärwicklungen des Transformators können beispielsweise in einer Stern- oder Dreieckschaltung miteinander verbunden sein. Entsprechend können die Sekundärwicklungen des Transformators ebenfalls in einer Stern- oder Dreieckschaltung miteinander verbunden sein. Falls die Primär- und/oder Sekundärwicklungen in einer Sternschaltung verbunden sind, so kann es von Vorteil sein, wenn wenigstens einer der Sternpunkte geerdet ist, beispielsweise mittels eines Ableiters. Die Anbindung des Stromrichters an das Wechselspannungsnetz mittels des Transformators hat den Vorteil, dass die am Stromrichter abfallenden Spannungen auf das Spannungsniveau des Wechselspannungsnetzes transformiert werden können. Darüber hinaus kann mittels des Transformators eine Potenzialtrennung zwischen der Wechselspannungsseite des Stromrichters und dem Wechselspannungsnetz realisiert werden. Der Transformator ist bevorzugt ein Stelltransformator, dessen primärseitige und/oder sekundärseitige Spannung variabel eingestellt werden kann.

Die Schaltanordnung kann beispielsweise primärseitig des Transformators angeordnet sein. Auf diese Weise kann die gesamte Stromrichteranordnung vom Wechselspannungsnetz getrennt werden.

Die Kurzschlusseinheit ist gemäß einer Ausführungsform der Erfindung primärseitig des Transformators angeordnet. Diese Ausführungsform der Erfindung hat den Vorteil, dass die Kurzschlusseinheit einen besonders einfachen Aufbau aufweist, da im Allgemeinen lediglich eine Schaltvorrichtung zum Kurzschließen der Phasen des ersten Wechselspannungsleitungsabschnitts untereinander benötigt wird. Für einige Anwendungen kann es jedoch von Vorteil sein, wenn die Kurzschlusseinheit Impedanzen zur Dämpfung eines Kurzschlussstromes aufweist, da unter Umständen der Strom im Kurzschlussfall nur durch die Impedanz des Wechselspannungsnetzes begrenzt wird.

Gemäß einer weiteren Ausführungsform der Erfindung ist die Kurzschlusseinheit sekundärseitig des Transformators angeordnet. Diese Ausführungsform der Erfindung hat, neben dem Einfachen Aufbau, den weiteren Vorteil, dass ein Kurzschlussstrom in der Wechselspannungsleitung durch die Impedanzen des Transformators und des Wechselspannungsnetzes begrenzt wird. Dies senkt den Bedarf nach strombegrenzenden Impedanzen in der Kurzschlusseinheit.

Es wird als vorteilhaft angesehen, wenn die Leiterzweige der Kurzschlusseinheit in einer isolierten Sternpunktschaltung miteinander verbunden sind, und an ihren dem Sternpunkt abgewandten Enden jeweils mittels der wenigstens einen Schaltvorrichtung der Kurzschlusseinheit mit den Phasen der Wechselspannungsleitung verbindbar sind. Der symmetrische Kurzschluss wird demnach durch ein Herstellen einer elektrischen Verbindung zwischen den Leiterzweigen der Kurzschlusseinheit und den Phasen der Wechselspannungsleitung hergestellt. Dabei sind die Leiterzweige der Kurzschlusseinheit in einer Einszu-Eins-Beziehung den Phasen der Wechselspannungsleitung zugeordnet. Ein isolierter Sternpunkt wird dabei als ein Sternpunkt ohne direkte Erdanbindung verstanden.

Zur Strombegrenzung kann die Kurzschlusseinheit in den Leiterzweigen angeordnete strombegrenzende Induktivitäten aufweisen. Mittels der Induktivitäten kann der Kurzschlussstrom durch die Kurzschlusseinheit wirksam begrenzt werden. Die Induktivitäten können beispielsweise Strombegrenzungsdrosseln sein. Ferner kann die Kurzschlusseinheit einen oder mehrere ohmsche Dämpfungswiderstände umfassen, die in den Leiterzweigen angeordnet sind. Die Dämpfungswiderstände dienen ebenfalls der Strombegrenzung.

Gemäß der Erfindung weist die Kurzschlusseinheit Induktivitäten auf, die Tertiärwicklungen einer Tertiärseite des Transformators ausbilden. Die Leiterzweige der Kurzschlusseinheit sind dabei in einer isolierten Sternpunktschaltung miteinander verbunden, wobei die Leiterzweige an ihren dem Sternpunkt abgewandten Enden jeweils mittels der wenigstens einen Schaltvorrichtung miteinander und mit der Tertiärseite verbindbar sind. Der Transformator weist demnach eine Tertiärseite auf, die durch die Tertiärwicklungen gebildet ist. Diese Ausführungsform hat den besonderen Vorteil, dass zur Realisierung der Kurzschlusseinheit übliche für Mittelspannung ausgelegte Bauelemente verwendet werden können. Dadurch kann ein besonders kosten- und platzoptimierter Aufbau der Kurzschlusseinheit erreicht werden. Die Leiterzweige sind beispielsweise an einem ihrer Enden mit einem isolierten Sternpunkt verbunden und weisen an dem anderen Ende jeweils eine Schaltvorrichtung auf, die beispielsweise einen Leistungsschalter und eine Steuereinheit zur Ansteuerung des Leistungsschalters umfasst. Jeder der Leiterzweige ist mittels der Schaltvorrichtung mit der Tertiärseite des Transformators, insbesondere mit den die Tertiärwicklungen ausbildenden Induktivitäten, und damit auch mit den anderen Leiterzweigen verbindbar. Bevorzugt umfasst jeder der Leiterzweige ferner eine Reihenschaltung aus einer Strombegrenzungsdrossel und/oder einem Dämpfungswiderstand. Diese dienen zu einer Begrenzung eines maximalen Kurzschlussstromes auf der Tertiärseite des Transformators.

Bevorzugt ist der Transformator ein YYD-Transformator. Das bedeutet, dass die Primärseite des Transformators in einer Sternschaltung, die Sekundärseite ebenfalls in einer Sternschaltung und die Tertiärwicklungen des Transformators in einer Deltaschaltung miteinander geschaltet sind. Es ist jedoch denkbar, dass die Wicklungen des Transformators in jeder anderen geeigneten Schaltanordnung realisiert sind.

Gemäß einer bevorzugten Ausführungsform der Erfindung umfasst der Stromrichter wenigstens ein zwischen einem Gleichspannungsanschluss und einem Wechselspannungsanschluss des Stromrichters angeordnetes Phasenmodul, wobei das Phasenmodul eine Reihenschaltung von zweipoligen Submodulen umfasst, wobei die Submodule jeweils wenigstens zwei Leistungshalbleiterschalter sowie einen Energiespeicher umfassen. Demnach ist der Stromrichter ein sogenannter modularer Mehrstufenumrichter.

Die Submodule des Stromrichters können beispielsweise als Halbbrückenschaltungen ausgebildet sein. Ein derartiger Stromrichter ist beispielsweise in der DE 10 103 031 A1 beschrieben. Es ist jedoch ebenfalls denkbar, dass der Stromrichter ein ebenfalls aus dem Stand der Technik bekannter Spannungszwischenkreisumrichter ist oder eine andere geeignete Stromrichtertopologie aufweist.

Die Erfindung betrifft ferner ein Verfahren zum Trennen einer mehrphasigen Wechselspannungsleitung.

Ein solches Verfahren ist beispielsweise aus der oben angeführten Druckschrift WO 2011/150963 A1 bekannt.

Eine Aufgabe der Erfindung ist es, ein Verfahren zum Trennen einer Wechselspannungsleitung vorzuschlagen, dass kostengünstig und zuverlässig durchgeführt werden kann.

Die Aufgabe wird erfindungsgemäß durch ein Verfahren gelöst, bei dem im Fall eines unsymmetrischen Erdschlusses in der Wechselspannungsleitung mittels einer der Wechselspannungsleitung zugeordneten Kurzschlusseinheit ein symmetrischer Kurzschluss in der Wechselspannungsleitung erdverbindungsfrei erzeugt wird, worauf die Wechselspannungsleitung mittels einer darin angeordneten Schaltanordnung getrennt wird.

Mit dem erfindungsgemäßen Verfahren lassen sich sinngemäß die gleichen Vorteile erreichen, wie sie oben zur erfindungsgemäßen Stromrichteranordnung angegeben sind.

Bevorzugt wird bei dem erfindungsgemäßen Verfahren eine Kurzschlusseinheit verwendet, die Leiterzweige sowie eine Tertiärseite eines in der Wechselspannungsleitung angeordneten Transformators ausbildende Induktivitäten umfasst, wobei die Leiterzweige an einem ihrer Enden zu einer isolierten Sternpunktschaltung verbunden sind, wobei der symmetrische Kurzschluss dadurch erzeugt wird, dass die Leiterzweige mittels einer Schaltvorrichtung jeweils an ihren dem Sternpunkt abgewandten Ende miteinander und mit den Induktivitäten verbunden werden. Diese Ausführungsform des Verfahrens ist vorteilhaft durch die Möglichkeit der Verwendung einer Kurzschlusseinheit, die einen besonders kosten- und platzoptimierten Aufbau aufweist.

Die Erfindung wird nachfolgend anhand eines in den Figuren 1 bis 4 dargestellten Ausführungsbeispiels der erfindungsgemäßen Stromrichteranordnung näher erläutert.
Figur 1 zeigt ein Ausführungsbeispiel einer erfindungsgemäßen Stromrichteranordnung in schematischer Darstellung;
Figur 2 zeigt eine Kurzschlusseinheit der Stromrichteranordnung der Figur 1 in schematischer Darstellung;
Figur 3 zeigt ein Beispiel eines Stromrichters der Stromrichteranordnung aus Figur 1 in schematischer Darstellung;
Figur 4 zeigt ein Beispiel eines Submoduls des Stromrichters der Figur 2 in schematischer Darstellung.

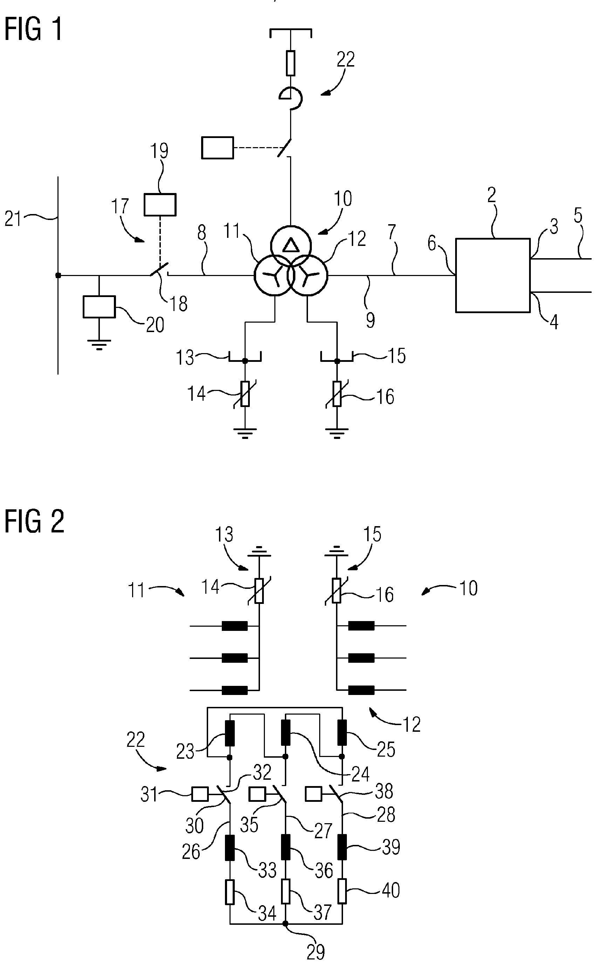

Im Einzelnen ist in Figur 1 ein Ausführungsbeispiel einer Stromrichteranordnung 1 gezeigt. Die Stromrichteranordnung 1 der Figur 1 ist in einer sogenannten Einliniendarstellung skizziert, wobei alle dreiphasigen Leitungen als eine Linie gekennzeichnet sind. Die Stromrichteranordnung 1 umfasst einen Stromrichter 2, der an seiner Gleichspannungsseite mittels zweier Gleichspannungsanschlüsse 3 und 4 mit einer bipolaren Gleichspannungsleitung 5 verbunden ist. Es sei in diesem Zusammenhang erwähnt, dass die Gleichspannungsleitung 5 ebenso beispielsweise monopolar ausgebildet sein kann. An einer Wechselspannungsseite ist der Stromrichter 2 mittels Wechselspannungsanschlüsse 6 mit einer dreiphasigen Wechselspannungsleitung 7 verbunden. Die dreiphasige Wechselspannungsleitung 7 ist in der Darstellung der Figur 1 als eine einzelne Linie dargestellt. Die Wechselspannungsleitung 7 umfasst einen ersten Wechselspannungsleitungsabschnitt 8 und einen zweiten Wechselspannungsleitungsabschnitt 9. Die beiden Wechselspannungsleitungsabschnitte 8 und 9 sind miteinander mittels eines Transformators 10 verbunden. Der Transformator 10 ist vom Typ YYD und weist Primärwicklungen 11 sowie Sekundärwicklungen 12 auf. Die Primärwicklungen 11 sind als eine Sternschaltung ausgebildet. Die Sekundärwicklungen 12 sind ebenfalls als eine Sternschaltung ausgebildet. Der erste Wechselspannungsleitungsabschnitt 8 ist demnach primärseitig des Transformators 10 angeordnet und mit den Primärwicklungen 11 verbunden. Der zweite Wechselspannungsleitungsabschnitt 9 ist sekundärseitig des Transformators 10 angeordnet und mit dem Stromrichter 2 verbunden.

Ein Sternpunkt der Primärwicklungen 11 ist über einen ersten Erdungszweig 13 mit einem darin angeordneten ersten Überspannungsableiter 14 geerdet. Ein Sternpunkt der Primärwicklungen 12 ist über einen zweiten Erdungszweig 15 mit einem darin angeordneten zweiten Überspannungsableiter 16 ebenfalls geerdet. Eine direkte Erdung der Sternpunkte kann jedoch in manchen Anwendungen von Vorteil sein. Die Erdungszweige 13, 15 können darüber hinaus Schalteinheiten zum Trennen der Erdungszweige 13, 15 umfassen.

Primärseitig des Transformators 10 ist eine Schaltanordnung 17 angeordnet. Die Schaltanordnung 17 umfasst einen Wechselspannungsleistungsschalter 18 sowie eine Steuereinheit 19 zur Steuerung des Wechselspannungsleistungsschalters 18. Mittels der Schaltanordnung 17 kann die Wechselspannungsleitung 7 getrennt werden.

Die Stromrichteranordnung 1 umfasst ferner eine Filtereinheit 20, die primärseitig des Transformators 10 angeordnet ist. Die Filtereinheit 20 kann eines oder mehrere passive und/oder aktive Filter zur Dämpfung von Oberschwingungen in der Wechselspannungsleitung 7 umfassen. Die Filtereinheit 20 ist mit Erde verbunden.

Die Stromrichteranordnung 1 ist wechselspannungsseitig des Stromrichters 2 mit einem Wechselspannungsnetz 21 verbunden. Die Stromrichteranordnung 1 ist somit zum Übertragen elektrischer Leistung zwischen dem Wechselspannungsnetz 21 und der Gleichspannungsleitung 5 geeignet. Die Stromrichteranordnung 1 ist jedoch im Allgemeinen nicht auf diese Anwendung beschränkt. Eine andere denkbare Anwendung ist beispielsweise eine Blindleistungskompensation in einem Wechselspannungssystem.

Die Stromrichteranordnung 1 umfasst ferner eine Kurzschlusseinheit 22, die in Figur 2 in einer Dreiphasendarstellung detailliert gezeigt ist, wobei gleiche und gleichartige Teile in den beiden Figuren 1 und 2 jeweils mit gleichen Bezugszeichen versehen sind. Die Kurzschlusseinheit 22 umfasst Induktivitäten 23, 24 und 25, die in einer Deltaschaltung miteinander verbunden sind und Tertiärwicklungen des Transformators 10 ausbilden. Die Kurzschlusseinheit 22 umfasst ferner drei Leiterzweige 26, 27 und 28. Die Leiterzweige 26, 27, 28 bilden an einem ihrer Enden eine Isolierte Sternpunktschaltung, wobei die drei Leiterzweige 26, 27, 28 in einem Sternpunkt 29 zusammenlaufen. Der Sternpunkt 29 ist isoliert, es besteht also keine direkte Erdverbindung zwischen dem Sternpunkt 29 und Erde.

Der Leiterzweig 26 weist eine Schaltvorrichtung 30 auf, wobei der Schaltvorrichtung 30 einen Leistungsschalter 32 sowie eine Steuereinheit 31 zum Ansteuern des Leistungsschalters 32 umfasst. Der Leiterzweig 26 ist mittels der Schaltvorrichtung 30 mit den Induktivitäten 23, 24, 25 und damit auch mit den dem Sternpunkt 29 abgewandten Enden der übrigen Zweige 27 und 28 verbindbar. Ferner weist der Leiterzweig 26 eine Reihenschaltung aus einer weiteren Strombegrenzungsdrossel 33 und eines Dämpfungswiderstandes 34 auf. Entsprechend umfasst auch der Leiterzweig 27 eine Schaltvorrichtung 35 und eine Reihenschaltung aus einer Strombegrenzungsdrossel 36 und Dämpfungswiderstand 37. Der Leiterzweig 27 ist mittels der Schaltvorrichtung 35 mit den entsprechenden Enden der Leiterzweige 26, 28 verbindbar. Ebenso umfasst der Leiterzweig 28 eine Schaltvorrichtung 38 und eine Reihenschaltung aus einer Strombegrenzungsdrossel 39 und Dämpfungswiderstand 40. Die Schaltvorrichtung 38 kann das dem Sternpunkt 29 abgewandte Ende des Leiterzweiges 28 mit den entsprechenden Enden der beiden übrigen Leiterzweige 26, 27 verbinden. Die Schaltvorrichtungen 30, 35 und 38 sind in dem in Figuren 1 und 2 gezeigten Ausführungsbeispiel der Stromrichteranordnung 1 gleichartig aufgebaut, was jedoch im Allgemeinen nicht zwingend ist.

In einem Normalbetrieb der Stromrichteranordnung 1 sind die Leistungsschalter der Schaltvorrichtungen 30, 35, 38 in einem geöffneten Zustand, so dass kein Strom durch die Strombegrenzungsdrosseln 33, 36, 39 und die Dämpfungswiderstände 34, 37, 40 fließt.

Um die Funktionsweise der Kurzschließeinheit 22 anhand eines Beispiels zu erläutern, wird im Folgenden von einem Fehler ausgegangen, der durch einen einphasigen Erdschluss im zweiten Wechselspannungsleitungsabschnitt 9 gegeben ist. Ein solcher unsymmetrischer Fehler kann zu einer Überlastung des Stromrichters 2 oder seiner Teile führen. Um den Stromrichter zu entlasten muss die Wechselspannungsleitung 7 getrennt werden. Aufgrund einer Sternpunktverschiebung bleiben jedoch Stromnulldurchgänge in der Wechselspannungsleitung 7 unter Umständen aus, so dass die Schaltanordnung 17 die Wechselspannungsleitung 7 nicht zuverlässig trennen kann.

Wird der Erdschluss beispielsweise von einer grafisch nicht dargestellten Fehlererfassungseinrichtung erfasst, so werden die Leistungsschalter der Schaltvorrichtungen 30, 35, 38 mittels der zugehörigen Steuereinheiten dazu angesteuert, zu schließen. Dadurch wird eine elektrische Verbindung zwischen den Leiterzweigen 26, 27 und 28 und den Tertiärwicklungen 23, 24, 25 des Transformators 10 hergestellt. Die Leiterzweige 26, 27, 28 werden zugleich auch miteinander verbunden (kurzgeschlossen). Aufgrund der Induktion im Transformator 10 fließt Strom durch die Leiterzweige 26, 27 und 28 Kurzschlusseinheit 22 und erzeugt rückwirkend einen symmetrischen Kurzschluss in der Wechselspannungsleitung 7. Auf diese Weise wird ein Nulldurchgang des Stromes in der Wechselspannungsleitung 7 erzwungen. Die Wechselspannungsleitungsschalter 18 der Schaltanordnung 17 (vgl. Figur 1) können damit die Wechselspannungsleitung 7 trennen.

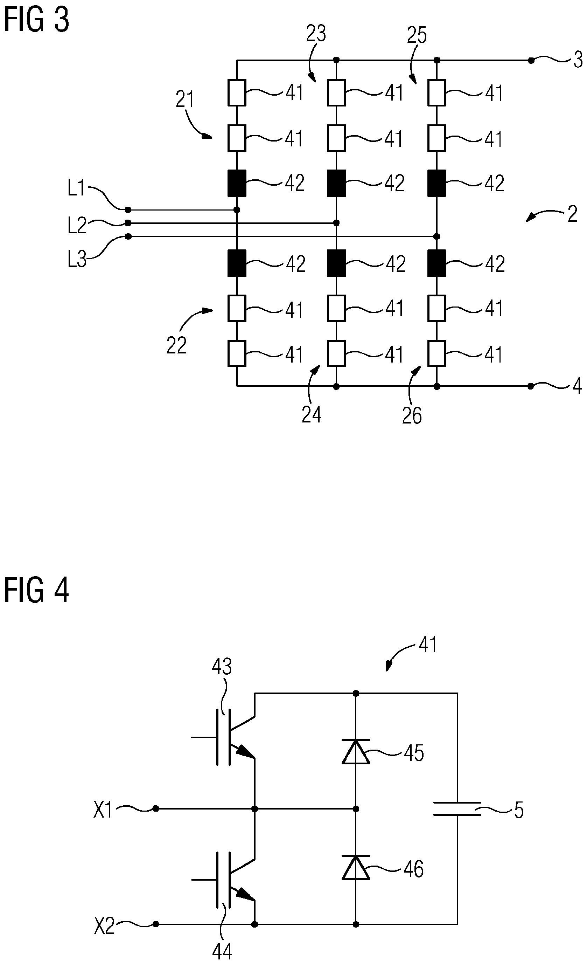

In Figur 3 ist der Stromrichter 2 der Stromrichteranordnung 1 aus Figur 1 dargestellt. Der Stromrichter 2 ist ein sogenannter modularer Mehrstufen-Umrichter (MMC). Der Mehrstufen-Umrichter 2 der Figur 3 umfasst drei Wechselspannungsanschlüsse L1, L2, L3, die den Wechselspannungsanschlüssen 6 der Figur 1 entsprechen. Mittels der Wechselspannungsanschlüsse L1, L2, L3 ist der Mehrstufen-Umrichter 2 an die Wechselspannungsleitung 7 angeschlossen. Der in Figur 3 dargestellte Mehrstufen-Umrichter 2 kann als Gleichrichter oder als Wechselrichter eingesetzt werden. Der Mehrstufen-Umrichter 2 umfasst ferner sechs Zweige Z1-Z6, die grundsätzlich jeweils eine Reihenschaltung von N baugleichen zweipoligen Submodulen 41 sowie eine Induktivität 42 aufweisen. In Figur 3 sind dabei der besseren Übersicht wegen lediglich zwei Submodule 41 pro Zweig dargestellt. Die Anzahl der Submodule 41 pro Zweig richtet sich im Allgemeinen nach den zu erzeugenden Spannungen an den Anschlüssen des Stromrichters 2. Jeder der Zweige Z1-Z6 ist entweder mit einer positiven Sammelschiene am Gleichspannungsanschluss 3 oder einer negativen Sammelschiene am Gleichspannungsanschluss 4 verbunden. Die Potentialdifferenz zwischen den beiden Klemmen X1 und X2 (siehe Figur 4) eines jeden zweipoligen Submoduls 41 wird als Submodul-Klemmenspannung bezeichnet. Jedes Submodul 41 kann einen ersten Schaltzustand annehmen, in dem die zugehörige Submodul-Klemmenspannung gleich Null ist; und einen zweiten Schaltzustand annehmen, in dem die Submodul-Klemmenspannung gleich einem von Null verschiedenen Wert ist. Dieser von Null verschiedener Wert ist im Wesentlichen durch eine an einem Energiespeicher S (siehe Figur 4) des Submoduls 41 abfallende Spannung definiert. Durch geeignete Ansteuerung der Submodule 41 des Mehrstufen-Umrichters 2 können demnach beispielsweise k der zwischen der positiven Sammelschiene 3 und der negativen Sammelschiene 4 in Reihe geschalteten Submodule 41 in den zweiten Schaltzustand geschaltet werden; die übrigen N-k Submodule werden in den ersten Schaltzustand geschaltet. Dadurch wird zwischen den Sammelschienen 3 und 4 eine Potentialdifferenz UPN erzeugt, die der Anzahl k der Submodule 41 entspricht, die sich im zweiten Schaltzustand befinden. Sind beispielsweise die Energiespeicher S der Submodule 41 auf eine einheitliche Spannungshöhe UC vorgeladen, so gilt für die Potentialdifferenz UPN=k^{∗}UC. Das Potential am Anschluss L1, das zum Beispiel als Potentialdifferenz zur Sammelschiene 3 definiert wird, ist dann proportional zu der Anzahl der im Zweig Z1 zwischen L1 und 3 liegenden Submodule 41, die sich im zweiten Schaltzustand befinden. Die Anzahl der maximal erzeugbaren (positiven bzw. negativen) Spannungsstufen zwischen L1 und 3 (bzw. 4) ist damit gleich der Anzahl N der in Reihe geschalteten Submodule 41 in dem zugehörigen Zweig Z1 bzw. Z2. Entsprechendes gilt für die Anschlüsse L2 und L3.

In Figur 4 ist das Submodul 41 des Stromrichters 2 der Figur 3 näher dargestellt. Das Submodul 41 der Figur 4 ist als Halbbrückenschaltung realisiert und weist zwei Klemmen X1, X2, zwei steuerbare elektronische Schalter 43, 44 sowie einen Energiespeicher S auf. Die beiden steuerbaren elektronischen Schalter 43, 44 sind unter Ausbildung einer Reihenschaltung in Reihe geschaltet. Die Reihenschaltung der elektronischen Schalter 43, 44 ist dabei parallel zum Energiespeicher S geschaltet. Die steuerbaren elektronischen Schalter 43, 44 werden durch Halbleiter wie IGBT, GTO, IGCT oder MOSFET realisiert. Jedem der steuerbaren elektronischen Schalter 43, 44 ist eine Diode 45 bzw. 46 antiparallel geschaltet. Die antiparallelen Dioden 45, 46 können diskrete Bauelemente oder in der Halbleiterstruktur der steuerbaren elektronischen Schalter 43, 44 integriert sein. Der Energiespeicher S ist als Speicherkondensator oder eine Kondensatorbatterie aus mehreren Speicherkondensatoren realisiert.

Der erste Schaltzustand des Submoduls 41 ist dadurch charakterisiert, dass der elektronische Schalter 44 eingeschaltet ist, während der elektronische Schalter 43 ausgeschaltet ist. Ist der elektronische Schalter 43 eingeschaltet, während der elektronische Schalter 44 ausgeschaltet ist, so befindet sich das Submodul 41 im zweiten Schaltzustand, bei dem an den Submodul-Klemmen X1, X2 im Wesentlichen die Spannung des Energiespeichers S abfällt. Sind beide elektronischen Schalter 43, 44 ausgeschaltet, so ist sichergestellt, dass in einem äußeren Fehlerfall (beispielsweise bei Klemmenkurzschluss) unerwünscht Energie abgegeben wird. Es sei hierbei darauf hingewiesen, dass die möglichen Ausgestaltungen des Submoduls 41 nicht auf das in den Figuren 3 und 4 dargestellte Ausführungsbeispiel beschränkt sind.

### Bezugszeichenliste

- 1: Stromrichteranordnung
- 2: Stromrichter
- 3, 4: Gleichspannungsanschluss
- 5: Gleichspannungsleitung
- 6: Wechselspannungsanschlüsse
- 7: Wechselspannungsleitung
- 8: erster Wechselspannungsleitungsabschnitt
- 9: zweiter Wechselspannungsleitungsabschnitt
- 10: Transformator
- 11: Primärwicklungen
- 12: Sekundärwicklungen
- 13: erster Erdungszweig
- 14: erster Überspannungsableiter
- 15: zweiter Erdungszweig
- 16: zweiter Überspannungsableiter
- 17: Schaltanordnung
- 18: Wechselspannungsleistungsschalter
- 19: Steuereinheit
- 20: Filtereinheit
- 21: Wechselspannungsnetz
- 22: Kurzschlusseinheit
- 23, 24, 25: Induktivität
- 26, 27, 28: Leiterzweig
- 29: Sternpunkt
- 30, 35, 38: Schaltvorrichtung
- 31: Steuereinheit
- 32: Leistungsschalter
- 33, 36, 39: Strombegrenzungsdrossel
- 34, 37, 40: Dämpfungswiderstand
- 41: Submodul
- 42: Drossel
- 43, 44: Leistungsschalter
- 45, 46: Freilaufdiode
- L1, L2, L3: Wechselspannungsanschluss
- S: Energiespeicher
- X1, X2: Klemme
- Z1 - Z6: Phasenzweige

## Patentansprüche

1. Stromrichteranordnung (1) mit einem Stromrichter (2), der gleichspannungsseitig mit einer Gleichspannungsleitung (5) und wechselspannungsseitig mit einer mehrphasigen Wechselspannungsleitung (7) verbindbar ist, sowie mit einer wechselspannungsseitig des Stromrichters (2) angeordneten Kurzschlusseinheit (22), wobei die Kurzschlusseinheit (22) den Phasen der Wechselspannungsleitung (7) zugeordnete Leiterzweige (26, 27, 28) sowie wenigstens eine Schaltvorrichtung (30, 35, 38) umfasst, wobei
die Leiterzweige (26, 27, 28) der Kurzschlusseinheit (22) mittels der wenigstens einen Schaltvorrichtung (30, 35, 38) unter Erzielung eines symmetrischen Kurzschlusses in der Wechselspannungsleitung (7) mit der Wechselspannungsleitung (7) und/oder miteinander erdverbindungsfrei verbindbar sind, wobei die Stromrichteranordnung (1) ferner einen in der Wechselspannungsleitung (7) angeordneten Transformator (10) umfasst, wobei die Wechselspannungsleitung (7) an einer Primärseite des Transformators (10) mit einem Wechselspannungsnetz (21) und an einer Sekundärseite mit dem Stromrichter (2) verbunden ist,
**dadurch gekennzeichnet, dass** die Kurzschlusseinheit (22) Induktivitäten (23, 24, 25) aufweist, die eine Tertiärseite des Transformators (10) ausbilden, wobei die Leiterzweige (26, 27, 28) der Kurzschlusseinheit (22) in einer isolierten Sternpunktschaltung miteinander verbunden sind, und wobei die Leiterzweige (26, 27, 28) an ihren dem Sternpunkt (29) abgewandten Enden jeweils mittels der wenigstens einen Schaltvorrichtung (30, 35, 38) miteinander und mit der Tertiärseite verbindbar sind.

2. Stromrichteranordnung (1) nach Anspruch 1, wobei die Stromrichteranordnung (1) ferner eine wechselspannungsseitig des Umrichters angeordnete Schaltanordnung (17) zum Trennen der Wechselspannungsleitung (7) umfasst.

3. Stromrichteranordnung (1) nach Anspruch 1, wobei die Schaltanordnung (17) primärseitig des Transformators angeordnet ist.

4. Stromrichteranordnung (1) nach Anspruch 1 bis 3, wobei die Kurzschlusseinheit (22) primärseitig des Transformators (10) angeordnet ist.

5. Stromrichteranordnung (1) nach Anspruch 1 bis 3, wobei die Kurzschlusseinheit (22) sekundärseitig des Transformators (10) angeordnet ist.

6. Stromrichteranordnung (1) nach Anspruch 4 oder 5, wobei die Leiterzweige der Kurzschlusseinheit (22) in einer isolierten Sternpunktschaltung miteinander verbunden sind, und wobei die Leiterzweige an ihren dem Sternpunkt abgewandten Enden jeweils mittels der wenigstens einen Schaltvorrichtung der Kurzschlusseinheit (22) mit den Phasen der Wechselspannungsleitung (7) verbindbar sind.

7. Stromrichteranordnung (1) nach Anspruch 6, wobei die Kurzschlusseinheit (22) in den Leiterzweigen angeordnete strombegrenzende Induktivitäten aufweist.

8. Stromrichteranordnung (1) nach Anspruch 1, wobei der Transformator (10) ein YYD-Transformator (10) ist.

9. Stromrichteranordnung (1) nach einem der vorangehenden Ansprüche, wobei der Stromrichter (2) wenigstens ein zwischen einem Gleichspannungsanschluss (3, 4) und einem Wechselspannungsanschluss (6) des Stromrichters (2) angeordnetes Phasenmodul (21 - 26) umfasst, wobei das Phasenmodul (21 - 26) eine Reihenschaltung von zweipoligen Submodulen (41) umfasst, wobei die Submodule (41) jeweils wenigstens zwei Leistungshalbleiterschalter (43, 44) sowie einen Energiespeicher (5) umfassen.

10. Stromrichteranordnung (1) nach Anspruch 9, wobei die Submodule (41) jeweils eine Halbbrückenschaltung ausbilden.

11. Verfahren zum Trennen einer mehrphasigen Wechselspannungsleitung (7), bei dem im Fall eines unsymmetrischen Erdschlusses in der Wechselspannungsleitung (7) mittels einer der Wechselspannungsleitung (7) zugeordneten Kurzschlusseinheit (22) ein symmetrischer Kurzschluss in der Wechselspannungsleitung (7) erdverbindungsfrei erzeugt wird, worauf die Wechselspannungsleitung (7) mittels einer darin angeordneten Schaltanordnung (17) getrennt wird,
wobei eine Kurzschlusseinheit (22) verwendet wird, die in einer isolierten Sternpunktschaltung miteinander verbundene Leiterzweige (26, 27, 28) sowie eine Tertiärseite eines in der Wechselspannungsleitung angeordneten Transformators ausbildende Induktivitäten (23, 24, 25) umfasst, wobei der symmetrische Kurzschluss dadurch erzeugt wird, dass die Leiterzweige (26, 27, 28) mittels wenigstens einer Schaltvorrichtung (30, 35, 38) jeweils an ihren dem Sternpunkt (29) abgewandten Enden miteinander und mit den Induktivitäten (23, 24, 25) verbunden werden.

## Claims

1. Converter arrangement (1) having a converter (2) that is able to be connected to a DC voltage line (5) on the DC voltage side and to a multiphase AC voltage line (7) on the AC voltage side, and having a short-circuit unit (22) arranged on the AC voltage side of the converter (2), wherein the short-circuit unit (22) comprises conductor branches (26, 27, 28) assigned to the phases of the AC voltage line (7) and at least one switching device (30, 35, 38), wherein
the conductor branches (26, 27, 28) of the short-circuit unit (22) are able to be connected to the AC voltage line (7) and/or to one another without an earth connection by way of the at least one switching device (30, 35, 38) so as to achieve a symmetrical short circuit in the AC voltage line (7), wherein the converter arrangement (1) furthermore comprises a transformer (10) arranged in the AC voltage line (7), wherein the AC voltage line (7) is connected to an AC voltage grid (21) on a primary side of the transformer (10) and to the converter (2) on a secondary side,
**characterized in that**
the short-circuit unit (22) has inductors (23, 24, 25) that form a tertiary side of the transformer (10), wherein the conductor branches (26, 27, 28) of the short-circuit unit (22) are connected to one another at an isolated star point connection, and wherein the conductor branches (26, 27, 28) are each able to be connected to one another and to the tertiary side, at their ends facing away from the star point (29), by way of the at least one switching device (30, 35, 38) .

2. Converter arrangement (1) according to Claim 1, wherein the converter arrangement (1) furthermore comprises a switching arrangement (17), arranged on the AC voltage side of the converter, for isolating the AC voltage line (7).

3. Converter arrangement (1) according to Claim 1, wherein the switching arrangement (17) is arranged on the primary side of the transformer.

4. Converter arrangement (1) according to Claim 1 to 3, wherein the short-circuit unit (22) is arranged on the primary side of the transformer (10).

5. Converter arrangement (1) according to Claim 1 to 3, wherein the short-circuit unit (22) is arranged on the secondary side of the transformer (10).

6. Converter arrangement (1) according to Claim 4 or 5, wherein the conductor branches of the short-circuit unit (22) are connected to one another at an isolated star point connection, and wherein the conductor branches are each able to be connected to the phases of the AC voltage line (7), at their ends facing away from the star point, by way of the at least one switching device of the short-circuit unit (22).

7. Converter arrangement (1) according to Claim 6, wherein the short-circuit unit (22) has current-limiting inductors arranged in the conductor branches.

8. Converter arrangement (1) according to Claim 1, wherein the transformer (10) is a YYD transformer (10).

9. Converter arrangement (1) according to one of the preceding claims, wherein the converter (2) comprises at least one phase module (21 - 26) arranged between a DC voltage terminal (3, 4) and an AC voltage terminal (6) of the converter (2), wherein the phase module (21 - 26) comprises a series connection of two-pole submodules (41), wherein the submodules (41) each comprise at least two power semiconductor switches (43, 44) and an energy store (5).

10. Converter arrangement (1) according to Claim 9, wherein the submodules (41) each form a half-bridge circuit.

11. Method for isolating a multiphase AC voltage line (7), in which, in the case of an asymmetric earth fault in the AC voltage line (7), a symmetrical short circuit is generated in the AC voltage line (7) without an earth connection by way of a short-circuit unit (22) assigned to the AC voltage line (7), whereupon the AC voltage line (7) is isolated by way of a switching arrangement (17) arranged therein,
wherein a short-circuit unit (22) is used that comprises conductor branches (26, 27, 28) connected to one another at an isolated star point connection and inductors (23, 24, 25) forming a tertiary side of a transformer arranged in the AC voltage line, wherein the symmetrical short circuit is generated by virtue of the conductor branches (26, 27, 28) each being connected to one another and to the inductors (23, 24, 25), at their ends facing away from the star point (29), by way of at least one switching device (30, 35, 38).

## Revendications

1. Montage (1) d'onduleur, comprenant un onduleur (2), qui peut être connecté, du côté de la tension continue, à une ligne (5) de tension continue et, du côté de la tension alternative, à une ligne (7) de tension alternative polyphasée, ainsi que comprenant une unité (22) de court-circuit, montée du côté de la tension alternative de l'onduleur (2), l'unité (22) de court-circuit comprenant des branches (26, 27, 28) conductrices, associées aux phases de la ligne (7) de tension alternative, ainsi qu'au moins un système (30, 35, 38) de coupure, dans lequel
les branches (26, 27, 28) conductrices de l'unité (22) de court-circuit peuvent être connectées, sans liaison à la terre, à la ligne (7) de tension alternative et/ou entre elles, au moyen du au moins un système (30, 35, 38) de coupure, en visant un court-circuit symétrique dans la ligne (7) de tension alternative, le montage (1) d'onduleur comprenant, en outre, un transformateur (10), monté dans la ligne (7) de tension alternative, la ligne (7) de tension alternative étant connectée à une côté primaire du transformateur (10) à un réseau (21) de tension alternative et à un côté secondaire à l'onduleur (2), **caractérisé en ce que**
l'unité (22) de court-circuit a des inductances (23, 24, 25), qui constituent un côté tertiaire du transformateur (10), les branches (26, 27, 28) conductrices de l'unité (22) de court-circuit étant connectées entre elles suivant un circuit isolé à point neutre et les branches (26, 27, 28) conductrices pouvant, à leur extrémité loin du point (29) neutre, être connectées chacune entre elles et au côté tertiaire au moyen du au moins un système (30, 35, 38) de coupure.

2. Montage (1) d'onduleur suivant la revendication 1, dans lequel le montage (1) d'onduleur comprend, en outre, pour séparer la ligne (7) de tension alternative, un montage (17) de coupure, monté du côté de la tension alternative de l'onduleur.

3. Montage (1) d'onduleur suivant la revendication 1, dans lequel le montage (17) de coupure est monté du côté primaire du transformateur.

4. Montage (1) d'onduleur suivant la revendication 1 à 3, dans lequel l'unité (22) de court-circuit est montée du côté primaire du transformateur (10).

5. Montage (1) d'onduleur suivant la revendication 1 à 3, dans lequel l'unité (22) de court-circuit est montée du côté secondaire du transformateur (10).

6. Montage (1) d'onduleur suivant la revendication 4 ou 5, dans lequel les branches conductrices de l'unité (22) de court-circuit sont connectées entre elles en un circuit isolé à point neutre et dans lequel les branches conductrices peuvent, à leur extrémité loin du point neutre, être connectées, respectivement, aux phases de la ligne (7) de tension alternative, au moyen d'au moins un système de coupure de l'unité (22) de court-circuit.

7. Montage (1) d'onduleur suivant la revendication 6, dans lequel l'unité (22) de court-circuit a des inductances limitant le courant, montées dans les branches conductrices.

8. Montage (1) d'onduleur suivant la revendication 1, dans lequel le transformateur (10) est un transformateur (10) YYD.

9. Montage (1) d'onduleur suivant l'une des revendications précédentes, dans lequel l'onduleur (2) comprend au moins un module (21 à 26) de phase, monté entre une borne (3, 4) de tension continue et une borne (6) de tension alternative de l'onduleur (2), le module (21 à 26) de phase comprenant un circuit série de sous-modules (41) bipolaires, les sous-modules (41) comprenant chacun au moins deux interrupteurs (43, 44) à semi-conducteur de puissance, ainsi qu'un accumulateur (5) d'énergie.

10. Montage (1) d'onduleur suivant la revendication 9, dans lequel les sous-modules (41) constituent chacun un circuit à demi-pont.

11. Procédé de séparation d'une ligne (7) de tension alternative polyphasée, dans lequel, dans le cas d'une borne de terre dissymétrique dans la ligne (7) de tension alternative, on produit, sans liaison à la terre, au moyen d'une unité (22) de court-circuit associée à la ligne (7) de tension alternative, un court-circuit symétrique dans la ligne (7) de tension alternative, puis on sépare la ligne (7) de tension alternative au moyen d'un montage (17) de coupure, qui y est monté,
dans lequel on utilise une unité (22) de court-circuit, qui comprend des branches (26, 27, 28) conductrices connectées entre elles en un circuit isolé à point neutre, ains que des inductances (23, 24, 25) constituant un côté tertiaire d'un transformateur monté dans la ligne de tension alternative, le court-circuit symétrique étant produit par le fait que l'on connecte entre elles, et avec les inductances (23, 24, 25), à leur extrémité loin du point (29) neutre, les branches (26, 27, 28) conductrices, au moyen d'au moins un système (30, 35, 38) de coupure.
